# EUROPÄISCHE PATENTSCHRIFT

(11) **EP 3 049 772 B1**
(45) Veröffentlichungstag und Bekanntmachung des Hinweises auf die Patenterteilung: **18.12.2019**
(21) Anmeldenummer: 14771888.6
(22) Anmeldetag: 23.09.2014
(51) Int. Cl.: G01F 23/296, G01N 29/22

(54) **FLÜSSIGKEITSTANK MIT EINEM ULTRASCHALLSENSOR**
LIQUID TANK COMPRISING AN ULTRASONIC SENSOR
RÉSERVOIR DE LIQUIDE MUNI D'UN CAPTEUR À ULTRASONS

(30) Priorität: 27.09.2013 DE 102013219643
(43) Veröffentlichungstag der Anmeldung: 03.08.2016
(73) Patentinhaber: Continental Automotive GmbH, 30165 Hannover (DE)
(72) Erfinder: STANGL, Ronny, 92331 Parsberg (DE); HEINRICH, Stephan, 84076 Pfeffenhausen (DE); SCHÄDLICH, Denny, 08223 Neustadt (DE)
(86) Internationale Anmeldenummer: PCT/EP2014/070163
(87) Internationale Veröffentlichungsnummer: WO 2015/044096

(56) Entgegenhaltungen:
- EP-A2- 0 167 338
- EP-A2- 0 813 044
- DE-A1-102006 017 284

## Beschreibung

Die vorliegende Erfindung betrifft einen Flüssigkeitstank mit einem Ultraschallsensor mit den Merkmalen des Oberbegriffs von Patentanspruch 1.

Bei der Laufzeitmessung mittels Ultraschall wird eine Ultraschallwelle von einem Sender emittiert, durchläuft eine unbestimmte Strecke und trifft anschließend auf den Empfänger. Sind die Ausbreitungsgeschwindigkeit und die Strecke zu einem Objekt bekannt, kann somit die Laufzeit der Welle ermittelt werden. Da es sich bei dem Sender (Ultraschallwandler) um eine Sender-Empfänger-Kombination handelt, muss die ausgestrahlte Schallwelle eine Reflektion erfahren, um wieder erfasst werden zu können. Hierzu finden im Schallpfad angeordnete Reflektoren Verwendung.

Besteht das Messsystem aus verschiedenen Materialien, ergeben sich mehrere Probleme. Durch unterschiedliche Wärmeausdehnungskoeffizienten der Materialien ist die Ausdehnung durch eine sich ändernde Temperatur an mehreren Stellen ungleich. Dies bewirkt eine Änderung der Messstrecke und somit eine Verfälschung der Referenzstrecke. Ist beispielsweise ein Reflektor aus Edelstahl an einem Kunststoffgehäuse befestigt, so wird sich bei einer Temperaturänderung die Strecke zwischen der Sender-Empfänger-Kombination und dem Reflektor ändern. Des Weiteren kann eine einwandfreie Funktionalität des Systems durch Alterung der Bauteile nicht gewährleistet werden. Kommt es über die Lebensdauer des mechanischen Aufbaus an einzelnen Stellen zu Ausdehnungen, Verdrehungen, Verspannungen oder sonstigen Abnutzungen der einzelnen Bauteile, ist eine Beeinträchtigung der Messeinheit nicht auszuschließen. Um diese Effekte einzudämmen, wird eine Messung mit zwei Reflektoren (Referenzen) durchgeführt. Hierbei ist zu beachten, dass die beiden Reflektorflächen bzw. Referenzflächen aus dem gleichen Material bzw. gleichen fest verbundenen Teilen bestehen, um die angeführten Effekte wie Wärme, Ausdehnung oder Alterung auf ein einziges Material zu beschränken. Gemessen wird hier nicht mehr die Laufzeit der Strecke Sender-Reflektor-Empfänger, sondern der Laufzeitunterschied zwischen den beiden verschieden weit entfernten Reflektorflächen (Referenzflächen) .

Es ist ein Ultraschallsensor bekannt, der sich in einem geschlossenen Behälter (Tank) befindet, der mit Flüssigkeit gefüllt ist. Die Aufgabe des Sensors ist, durch eine Laufzeitmessung die Konzentration der Flüssigkeit zu ermitteln. Des Weiteren soll hierbei der aktuelle Füllstand gemessen werden. Dabei ist der mechanische Aufbau so angeordnet, dass ein Teil der von einem Sender/Empfänger abgegebenen Schallwelle an einer Referenzstruktur mit zwei Reflektoren reflektiert wird. Ein anderer Teil der Welle wird über einen Spiegel zur Flüssigkeitsoberfläche gelenkt, um den Füllstand zu ermitteln.

Die Referenzstruktur ist hierbei liegend (flächig) angeordnet, wobei die beiden Reflektoren von ebenen Flächen der gemeinsamen Referenzstruktur gebildet werden, welche einen unterschiedlichen Abstand vom Sender/Empfänger besitzen. Diese liegende Referenzstruktur hat den Vorteil, dass sie sich nicht direkt im Schallpfad befindet, so dass kein zu großer Teil des Signals abgeschirmt wird und somit eine Füllstandsmessung möglich ist.

Da die Bauhöhe der Referenzstruktur eines derartigen Ultraschallsensors nur relativ gering ist, ist hier die Gefahr einer Schmutzablagerung sehr groß, die zu Messverfälschungen führen kann. Auch wirken sich Fertigungstoleranzen der Ultraschallwandler, die zu unterschiedlichen Abstrahlwinkeln der Schallkeule führen können, bei derart ausgebildeten relativ flachen Referenzstrukturen relativ stark auf die Messgenauigkeit aus. Schließlich besteht bei solchen Referenzstrukturen mit ebenen Reflektionsflächen folgendes Problem: Beim Betanken des Behälters werden Luftblasen mit hineingespült oder entstehen, die sich an verschiedenen Bauteilen festsetzen, was dazu führen kann, dass eine Messung verfälscht oder ganz verhindert wird. Auch bei steigender Temperatur können sich durch Ausgasung Gasblasen im System bilden, wenn es durch den Betankungsvorgang noch nicht geschehen ist. Solche Blasen können das Messsystem behindern, insbesondere kann es zu Mehrfachreflektionen oder ungewollten Signalumlenkungen kommen, welche das Messergebnis verfälschen können.

Ein Flüssigkeitstank mit den Merkmalen des Oberbegriffs von Patentanspruch 1 ist aus der DE 15 48 930 A bekannt. In dieser Veröffentlichung ist eine Ultraschallvorrichtung zur Messung der Niveauhöhe einer Flüssigkeit beschrieben. Der Ultraschallwellenpfad verläuft hierbei senkrecht zum Pegel der Flüssigkeit, und die Reflektoren sind in der Form von liegenden Zylindern angeordnet.

Aus der US 6,360,599 B1 sind eine Vorrichtung und ein Verfahren zum Messen eines Flüssigkeitspegels bekannt. Auch bei dieser Vorrichtung verläuft der Ultraschallwellenpfad senkrecht zum Pegel der Flüssigkeit, und es sind liegend angeordnete zylindrische Reflektoren vorgesehen.

Die DE 10 2006 017 284 A1 betrifft eine Vorrichtung zur Messung des Füllstandes einer Flüssigkeit in einem Rohr mit einem am Boden eines Flüssigkeitstanks angeordneten Ultraschallsensor. Hierbei findet ein flächiger Reflektor Verwendung.

Die in der WO 2009/074428 A1 beschriebene Vorrichtung zur Messung eines Füllstandes einer Flüssigkeit in einem Behälter hat einen am Boden des Behälters angeordneten Ultraschallsensor mit entsprechenden rohrförmig ausgebildeten Schallführungskörpern.

Aus der EP 0 167 338 A2 ist ein Ultraschallsender/Empfänger mit einem ersten Reflektor in Form einer planaren oder gekrümmten Fläche auf einer Kugel und einem zweiten Reflektor in Form einer konkav gekrümmten Fläche auf einem Zylinder bekannt.

Der vorliegenden Erfindung liegt die Aufgabe zugrunde, einen Flüssigkeitstank gemäß Oberbegriff von Patentanspruch 1 zu schaffen, dessen Ultraschallsensor sich bei einer einfachen Fertigungsmöglichkeit durch eine besonders hohe Messgenauigkeit auszeichnet.

Diese Aufgabe wird erfindungsgemäß bei einem Flüssigkeitstank der angegebenen Art durch die kennzeichnenden Merkmale von Patentanspruch 1 gelöst.

Mit "Zylinder" sind hierbei solche mit beliebig ausgebildeter Grundfläche gemeint, wenn zumindest ein Teil ihrer Mantelfläche, auf den die Signale treffen, gekrümmt ausgebildet ist. Bevorzugt sind Kreiszylinder und stehende Zylinder (mit senkrecht zur Bodenfläche verlaufender Achse).

Es ist bekannt, dass ebene flächige Reflektoren sich durch eine hohe Stärke des reflektierten Signales auszeichnen. Erfindungsgemäß wird demgegenüber ein Signal mit geringerer Signalstärke aufgrund der eingesetzten Zylinder, insbesondere Kreiszylinder, in Kauf genommen, da sich mit solchen Reflektoren in der Form eines Zylinders eine Reihe von anderen Vorteilen erzielen lässt. Der erfindungsgemäß ausgebildete Sensor ist relativ unempfindlich gegenüber Verschmutzungen, die sich am Boden eines Tanks etc. ablagern, da die Reflektoren nicht als liegende Strukturen, sondern in der Form von stehenden Zylindern ausgebildet sind, die eine relativ große Bauhöhe besitzen. Hierüber wird auch eine gewisse Unempfindlichkeit gegenüber Fertigungsstreuungen des Senders (Schallkeule) erreicht. Durch die runde Oberfläche der Zylinder wird ferner die Haftung von Blasen gehemmt, da keine ebene Fläche vorhanden ist.

Ein besonderer Vorteil wird dadurch erzielt, dass der erfindungsgemäße Sensor relativ unempfindlich gegenüber mechanischen Toleranzen ist, die durch Verdrehung bzw. Lagetoleranzen der Reflektoren hervorgerufen werden. Insbesondere dann, wenn die Reflektoren die Form eines Kreiszylinders besitzen, ist nur noch eine geringe Winkelabhängigkeit bzw. überhaupt keine Winkelabhängigkeit im Vergleich zu flächigen Referenzen vorhanden, da durch die Rotationssymmetrie eines Kreiszylinders der geometrische Reflektionsbereich aus jedem Winkel der Anstrahlung identisch ist.

In Bezug auf den reflektierenden Bereich spielt der Durchmesser der Reflektionszylinder nur eine untergeordnete Rolle. Wird ein kleiner Durchmesser, dafür aber eine gewisse Bauteilhöhe verwendet, kann der Zylinder sehr nahe in den Bereich des Hauptstrahles der emittierten Schallwelle positioniert werden, ohne diese zu stark zu verdecken. Da die Bauhöhe des Reflektionszylinders frei gewählt werden kann, sind Partikelablagerungen am Fuß des Reflektors unbedenklich, wie erwähnt, so dass das gesamte System somit unempfindlicher gegenüber Verschmutzungen ist.

Durch die frei wählbare Bauhöhe wird auch der negative Einfluss der durch Fertigungsstreuungen des Wandlers bedingten Abweichung des Abstrahlwinkels der Schallkeule vermindert. Wird die Schallwelle nicht horizontal ausgestrahlt, verkleinert sich bei einer herkömmlichen liegenden Referenzstruktur die Größe der im Schallkegel liegenden Fläche, was zu einer Abschwächung der empfangenen Schallwelle führt. Dieser Effekt wird mit der beschriebenen Bauweise der Reflektoren als Stabreflektoren im Wesentlichen neutralisiert.

Ferner ist die Fertigung einer Referenzstruktur als Flächenreflektor technisch aufwändiger, da die Teile gewissen Regeln in Ausrichtung und Toleranz unterliegen. Derzeit werden sie gefräst, gestanzt oder gebogen. Bei der Verwendung von Linienreflektoren, um die es sich bei dem hier verwendeten Kreiszylinder handelt, wird der technische Aufwand niedriger, da Rundmaterialien jeden Durchmessers fertig als Stangenmaterial zur Verfügung stehen. Durch die relativ große Unabhängigkeit beim Durchmesser gibt es hier auch keine besonderen Probleme mit Toleranzen.

In Weiterbildung der Erfindung sind beide Reflektoren auf einer gemeinsamen Platte angeordnet, die aus dem gleichen Material wie die Reflektoren besteht. Hierdurch werden insbesondere Probleme mit unterschiedlichen Wärmeausdehnungskoeffizienten vermieden. Der Ultraschallsensor kann ferner einen im Ultraschallpfad hinter den beiden Reflektoren angeordneten Spiegel zur Schallumlenkung besitzen. Wie bereits erwähnt, weisen die beiden Reflektoren vorzugsweise einen relativ geringen Durchmesser auf, so dass sie die Schallausbreitung zu dem zur Schallumlenkung verwendeten Spiegel nicht wesentlich behindern.

Der Ultraschallsensor dient vorzugsweise zur Messung der Konzentration einer Flüssigkeit. Zusätzlich kann er zur Messung des Flüssigkeitsfüllstandes dienen, wozu die entsprechende Schallumlenkung mit Spiegel eingesetzt wird. Der Sensor ist am Boden eines Flüssigkeitstanks angeordnet und dient dabei vorzugsweise zur Messung der Konzentration der im Tank befindlichen Flüssigkeit über eine durchgeführte Laufzeitmessung. Zusätzlich kann der Flüssigkeitsstand im Tank über eine entsprechende Laufzeitmessung gemessen werden.

Speziell kann der erfindungsgemäß ausgebildete Ultraschallsensor zur Messung der Konzentration einer Harnstofflösung in einem Tank verwendet werden. Derartige Tanks befinden sich in Kraftfahrzeugen und dienen zur Mitführung einer Harnstofflösung, die dem Abgas des Kraftfahrzeuges zugeführt wird, um dort die NOₓ-Konzentration zu verringern.

Die Erfindung wird nachfolgend anhand eines Ausführungsbeispiels in Verbindung mit der Zeichnung im Einzelnen erläutert. Es zeigen:
- Figur 1: schematisch die Darstellung eines Sender/Empfängers und eines Reflektors, wobei der Reflektor zum einen mit einer ebenen Reflektionsfläche und zum anderen mit einer runden Reflektionsfläche versehen ist, und
- Figur 2: den schematischen Aufbau eines Ultraschallsensors, der zwei Reflektoren in der Form von stehenden Zylindern aufweist.

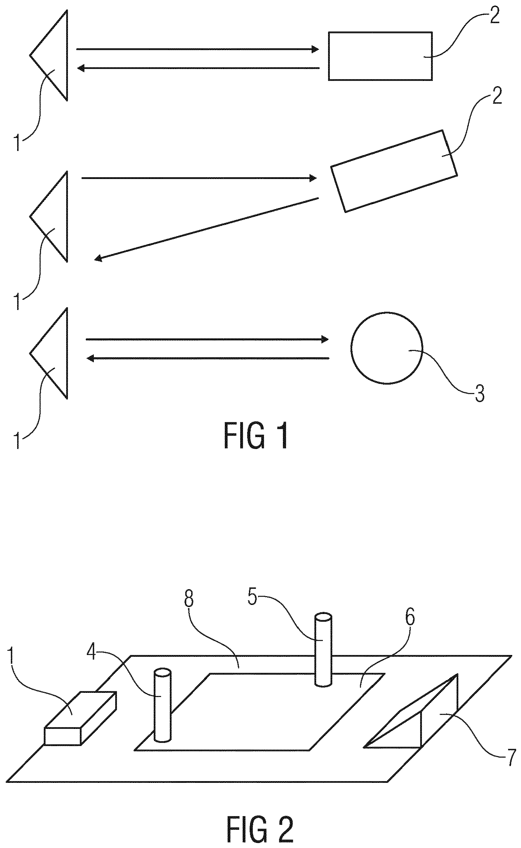

Figur 1 zeigt in der oberen Abbildung schematisch einen Sender/Empfänger 1 und einen Reflektor 2, der eine ebene Reflektionsfläche besitzt. Bei der Darstellung der oberen Abbildung nimmt der Reflektor 2 seine exakte Lage ein, so dass der reflektierte Strahl parallel zum einfallenden Strahl verläuft. Mit dieser Anordnung ist eine exakte Messung der Ultraschalllaufzeit möglich.

Bei der Darstellung der mittleren Abbildung ist der Reflektor 2 gegenüber der Position der oberen Darstellung verdreht. Der reflektierte Strahl wird daher abgelenkt und trifft nicht mehr exakt auf den Empfänger, was eine starke Abschirmung des Signals nach sich zieht. Dieser Effekt tritt bei einem Stabreflektor 3, der bei der unteren Abbildung der Figur 1 vorhanden ist, nicht auf. Bei einem derartigen Stabreflektor 3 in der Form eines stehenden Zylinders existiert eine solche Winkelabhängigkeit nicht, da durch die Rotationssymmetrie eines Zylinders der geometrische Reflektionsbereich aus jedem Winkel der Anstrahlung identisch ist. Ein derartiger Stabreflektor in der Form eines stehenden Kreiszylinders findet bei dem erfindungsgemäß ausgebildeten Ultraschallsensor Verwendung.

Figur 2 zeigt schematisch den Aufbau eines Ultraschallsensors, der am Boden 8 eines Flüssigkeitstanks, beispielsweise eines Tanks, der eine Harnstofflösung aufnimmt, angeordnet ist. Ein Sender/Empfänger 1 gibt Ultraschallwellen in Form einer nicht gezeigten Schallkeule ab, deren Mittelachse etwas horizontal verläuft. Die Ultraschallwellen breiten sich durch die im Tank vorhandene Flüssigkeit aus und treffen dabei auf eine Referenzstruktur, die zwei Reflektoren 4, 5 aufweist, welche jeweils die Form eines stehenden Kreiszylinders besitzen. Beide Reflektoren 4, 5 sind auf einer gemeinsamen Platte 6 befestigt. Die Reflektoren 4, 5 und die Platte 6 bestehen aus dem gleichen Material.

Die Reflektoren 4, 5 sind so im Ultraschallwellenpfad angeordnet, dass sie zwar sehr nah im Bereich des Hauptstrahles der emittierten Schallwelle positioniert sind, jedoch ohne diese zu stark zu verdecken. Die als stehende Zylinder ausgebildeten Reflektoren 4, 5 sind relativ unempfindlich gegen Verdrehungen bzw. Lagetoleranzen, gegen Verschmutzungen (bodennahe Partikelablagerungen) und gegenüber Fertigungsstreuungen des Senders/Empfängers. Sie hemmen die Anhaftungen von Blasen und sind leicht zu fertigen.

Die vom Sender/Empfänger 1 abgestrahlten Schallwellen treffen linear auf die beiden Reflektoren 4, 5 auf. Die reflektierten Wellen werden vom Sender/Empfänger 1 empfangen. Aus der gemessenen Laufzeit kann die Konzentration der im Tank befindlichen Flüssigkeit ermittelt werden.

Die vom Sender/Empfänger 1 abgesandten Schallwellen treffen ferner auf den Spiegel 7 und werden von dort nach oben abgelenkt. Sie treffen auf die Flüssigkeitsoberfläche und werden von dort über den Spiegel 7 auf den Sender/Empfänger zurück reflektiert. Aus der gemessenen Laufzeit kann der Flüssigkeitsstand ermittelt werden.

## Patentansprüche

1. Flüssigkeitstank mit einem Ultraschallsensor zur Laufzeitmessung in einer im Tank befindlichen Flüssigkeit, der einen Sender/Empfänger (1) und einen ersten und zweiten Reflektor (4, 5), die in der Form eines Zylinders ausgebildet sind, aufweist, **dadurch gekennzeichnet, dass** der Ultraschallsensor am Boden (8) des Flüssigkeitstanks angeordnet ist und dass beide Reflektoren (4, 5) als stehende Zylinder ausgebildet sind, wobei die Reflektoren (4,5) derart angeordnet sind, dass vom Sender/Empfänger (1) abgestrahlte Schallwellen auf die Mantelflächen der beiden Reflektoren (4, 5) auftreffen und von dort reflektierte Wellen vom Sender/Empfänger (1) empfangen werden.

2. Flüssigkeitstank nach Anspruch 1, **dadurch gekennzeichnet, dass** beide Reflektoren (4, 5) auf einer gemeinsamen Platte (6) angeordnet sind, die aus dem gleichen Material wie die Reflektoren (4, 5) besteht.

3. Flüssigkeitstank nach Anspruch 1 oder 2, **dadurch gekennzeichnet, dass** er einen im Ultraschallwellenpfad hinter den beiden Reflektoren (4, 5) angeordneten Spiegel (7) zur Schallumlenkung besitzt.

4. Flüssigkeitstank nach einem der vorangehenden Ansprüche, **dadurch gekennzeichnet, dass** der Ultraschallsensor zur Messung der Konzentration einer Flüssigkeit ausgebildet ist.

5. Flüssigkeitstank nach einem der vorangehenden Ansprüche, **dadurch gekennzeichnet, dass** der Ultraschallsensor zusätzlich zur Messung des Flüssigkeitsfüllstandes ausgebildet ist.

6. Flüssigkeitstank nach einem der vorangehenden Ansprüche, **dadurch gekennzeichnet, dass** der Ultraschallsensor zur Messung der Konzentration einer Harnstofflösung im Flüssigkeitstank ausgebildet ist.

## Claims

1. Liquid tank having an ultrasonic sensor for measuring the propagation time in a liquid which is located in the tank, which tank has a transmitter/receiver (1) and a first and second reflector (4, 5) which are designed in the form of a cylinder, **characterized in that** the ultrasonic sensor is arranged on the floor (8) of the liquid tank, and **in that** the two reflectors (4, 5) are designed as standing cylinders, wherein the reflectors (4, 5) are arranged in such a way that sound waves which are emitted by the transmitter/receiver (1) hit the lateral surfaces of the two reflectors (4, 5) and waves reflected from there are received by the transmitter/receiver (1).

2. Liquid tank according to Claim 1, **characterized in that** the two reflectors (4, 5) are arranged on a common plate (6) which is composed of the same material as the reflectors (4, 5) .

3. Liquid tank according to Claim 1 or 2, **characterized in that** it has a mirror (7) for deflecting sound, which mirror is arranged behind the two reflectors (4, 5) in the ultrasonic wave path.

4. Liquid tank according to one of the preceding claims, **characterized in that** the ultrasonic sensor is designed to measure the concentration of a liquid.

5. Liquid tank according to one of the preceding claims, **characterized in that** the ultrasonic sensor is additionally designed to measure the filling level of the liquid.

6. Liquid tank according to one of the preceding claims, **characterized in that** the ultrasonic sensor is designed to measure the concentration of a urea solution in the liquid tank.

## Revendications

1. Réservoir de liquide muni d'un capteur à ultrasons pour la mesure du temps de parcours dans un liquide se trouvant dans le réservoir, qui présente un émetteur/récepteur (1) et un premier et un second réflecteur (4, 5), qui sont réalisés en forme de cylindre, **caractérisé en ce que** le capteur à ultrasons est disposé sur le fond (8) du réservoir de liquide et **en ce que** les deux réflecteurs (4, 5) sont réalisés sous la forme de cylindres dressés, dans lequel les réflecteurs (4, 5) sont disposés de telle manière que des ondes sonores émises par l'émetteur/récepteur (1) frappent les surfaces latérales des deux réflecteurs (4, 5) et que des ondes étant réfléchies soient reçues par l'émetteur/récepteur (1).

2. Réservoir de liquide selon la revendication 1, **caractérisé en ce que** les deux réflecteurs (4, 5) sont disposés sur une plaque commune (6), qui est constituée de la même matière que les réflecteurs (4, 5).

3. Réservoir de liquide selon la revendication 1 ou 2, **caractérisé en ce qu'**il comporte un miroir (7) disposé dans le trajet des ondes ultrasonores derrière les deux réflecteurs (4, 5) pour dévier les ondes sonores.

4. Réservoir de liquide selon l'une quelconque des revendications précédentes, **caractérisé en ce que** le capteur à ultrasons est réalisé pour mesurer la concentration d'un liquide.

5. Réservoir de liquide selon l'une quelconque des revendications précédentes, **caractérisé en ce que** le capteur à ultrasons est réalisé en outre pour mesurer le niveau de remplissage du liquide.

6. Réservoir de liquide selon l'une quelconque des revendications précédentes, **caractérisé en ce que** le capteur à ultrasons est réalisé pour mesurer la concentration d'une solution d'urée dans le réservoir de liquide.
